# EUROPEAN PATENT SPECIFICATION

(11) **EP 3 562 602 B1**
(45) Date of publication and mention of the grant of the patent: **22.04.2020**
(21) Application number: 17828751.2
(22) Date of filing: 21.12.2017
(51) Int. Cl.: B08B 17/02, B63B 59/04, C02F 1/46, C23F 13/02, C23F 13/04, C23F 13/06, C23F 13/10, C23F 13/20

(54) **ARRANGEMENT FOR ANTI-FOULING OF A PROTECTED SURFACE**
ANORDNUNG ZUR BEWUCHSVERHINDERUNG EINER GESCHÜTZTEN OBERFLÄCHE
DISPOSITIF D'ANTISALISSURE DE SURFACE PROTÉGÉE

(30) Priority: 27.12.2016 EP 16206917
(43) Date of publication of application: 06.11.2019
(73) Proprietor: Koninklijke Philips N.V., 5656 AG Eindhoven (NL)
(72) Inventor: VAN DELDEN, Marc, 5656 AE Eindhoven (NL)
(74) Representative: Marsman, Albert Willem
(86) International application number: PCT/EP2017/084252
(87) International publication number: WO 2018/122126

(56) References cited:
- WO-A2-03/038398
- CN-B- 103 865 307
- US-A- 5 009 757

## Description

### FIELD OF THE INVENTION

The invention relates to an arrangement for anti-fouling of a surface of a marine structure when in contact with a liquid containing biofouling organisms, for example a vessel in seawater.

### BACKGROUND OF THE INVENTION

Biofouling of surfaces which are exposed to water, during at least a part of their lifetime, is a well-known phenomenon, which causes substantial problems in many fields. For example, in the field of shipping, biofouling on the hull of ships is known to cause a severe increase in drag of the ships, and thus increased fuel consumption of the ships. In this respect, it is estimated that an increase of up to 40% in fuel consumption can be attributed to biofouling.

In general, biofouling is the accumulation of microorganisms, plants, algae, small animals and the like on surfaces. According to some estimates, over 1,800 species comprising over 4,000 organisms are responsible for biofouling. Hence, biofouling is caused by a wide variety of organisms, and involves much more than an attachment of barnacles and seaweeds to surfaces. Biofouling is divided into micro fouling which includes biofilm formation and bacterial adhesion, and macro fouling which includes the attachment of larger organisms. Due to the distinct chemistry and biology that determine what prevents them from settling, organisms are also classified as being hard or soft. Hard fouling organisms include calcareous organisms such as barnacles, encrusting bryozoans, mollusks, polychaetes and other tube worms, and zebra mussels. Soft fouling organisms include non-calcareous organisms such as seaweed, hydroids, algae and biofilm "slime". Together, these organisms form a fouling community.

As mentioned in the foregoing, biofouling creates substantial problems. Biofouling can cause machinery to stop working and water inlets to get clogged, to mention only two other negative consequences than the above-mentioned increase of drag of ships. Hence, the topic of anti-bio fouling, i.e. the process of removing or preventing biofouling, is well-known.

WO 2014/188347 A1 discloses a method of anti-fouling of a surface while said surface is at least partially submersed in a liquid environment, in particular an aqueous or oily environment. The method involves providing anti-fouling light from an optical medium in close proximity to the protected surface. The anti-fouling light may be ultraviolet light. By applying the method known from WO 2014/188347, it is possible to cover a protected surface to be kept clean from biofouling, at least to a significant extent, with a layer that emits germicidal light. CN-A-103865 307 discloses an arrangement for inhibiting fouling of marine structures using a pulsed DC potential.

### SUMMARY OF THE INVENTION

It follows from the foregoing that WO 2014/188347 addresses the subject of an anti-fouling by using a light emitting arrangement. However, the light emitting arrangement is relatively complex and expensive to produce, mount and operate.

The invention has as an object to provide anti-fouling of a surface in a more convenient way.

According to the invention, an arrangement is provided for anti-fouling of a surface of a marine structure when in contact with a liquid containing biofouling organisms, the arrangement comprising:
- a power source having a first pole to be coupled to a first conductor in contact with the liquid and a second pole to be coupled to a second conductor in contact with the liquid, the first and second conductors being distributed across the marine structure for providing an electrical potential across a protected area of the surface; and
- one or more floating electrodes to be arranged covering the protected area, each floating electrode comprising a conductive layer being electrically isolated from the surface and a dielectric layer to separate the conductive layer and the liquid;
the power source being arranged to generate voltage pulses for charging and discharging the floating electrodes due to changes in the electrical potential for generating charging and discharging currents in the liquid at the dielectric layer.

According to a further aspect of the invention, a marine structure is provided having a surface to be protected when in contact with a liquid containing biofouling organisms, the marine structure comprising an arrangement as defined above, wherein
- the first and second conductors are distributed across the marine structure for providing an electrical potential across a protected area of the surface;
- the power source has the first pole coupled to the first conductor and the second pole coupled to the second conductor; and
- the one or more floating electrodes are attached on the surface of the marine structure covering the protected area.

According to a further aspect of the invention, a method is provided for installing the arrangement as defined above, the method comprising
- applying the one or more floating electrodes to a surface of a marine structure to be protected from fouling when in contact with a liquid containing biofouling organisms for covering a protected area of the surface;
- distributing the first and second conductors across the marine structure for providing an electrical potential across the protected area;
- providing the power source in or on the marine structure; and
- coupling the first pole to the first conductor and the second pole to the second conductor.

According to a further aspect of the invention, a method is provided for operating the arrangement as defined above,
the one or more floating electrodes being located on a surface of a marine structure to be protected from fouling for covering a protected area of the surface, the marine structure being in contact with a liquid containing biofouling organisms;
each floating electrode comprising a conductive layer being electrically isolated from the surface and a dielectric layer to separate the conductive layer and the liquid;
first and second conductors being distributed across the marine structure for providing an electrical potential across the protected area;
the method comprising
- generating voltage pulses between the first and second conductors for charging and discharging the floating electrodes due to changes in an electrical potential across the protected area for generating charging and discharging currents in the liquid at the dielectric layer.

The above features have the effect that, when the invention is put to practice, an anti-fouling arrangement is provided that is effective for preventing biofouling of a protected surface.

A protected area of the surface can be, for example, part of the hull of a ship, but the arrangement is equally applicable to other surfaces of any type of structure that is in contact with any type of fouling liquid, e.g. oil rigs or wind turbines positioned in seawater or lakes or devices in any other liquid environment. In the current document, such various structures are named marine structures.

On the surface, one or more floating electrodes are arranged covering the protected area. Each floating electrode has a conductive layer which is electrically isolated from the surface. The floating electrode also has a dielectric layer to separate the conductive layer and the liquid. For example, isolation from the surface can be achieved by one or more coating layers on the marine structure and/or the backside of the floating electrodes. The dielectric layer may be easily formed by a coating or cover layer on the conductive layer, for example by the conductive layer being embedded in an isolating material.

The power source causes charging and discharging currents in the liquid at the dielectric layer, as explained below. Due to such currents, which occur all across the protected surface where it is covered by the floating electrodes, biofouling organisms appear to be killed, driven away or at least prevented from attaching to the protected surface. Advantageously the floating electrodes are relatively cheap to provide on said surface. Moreover, the dielectric layer acts as a cover layer that physically protects the conductive layer from the liquid.

The power source generates voltage pulses to create changes in the electrical potential for generating charging and discharging currents in the liquid at the dielectric layer. When the local potential of the liquid increases or decreases, the capacitor that is formed by the conductive layer and the dielectric layer will be charged and discharged. The amount of current per square meter depends on the effective capacitance per square meter and the rate of change of the potential, and the effective resistance in a charging circuit constituted by the capacitor, the liquid, the first and second conductors and the power source.

The power source has a first pole coupled to a first conductor in contact with the liquid and a second pole coupled to a second conductor in contact with the liquid. The first and second conductors are located outside the protected area. For example, the first conductor may, for example, be formed by one of more electrodes mounted on isolated material and in direct contact with the liquid, similar to anodes used for cathodic protection. The second conductor may be constituted by conductive parts of the marine structure in direct contact with the liquid, such as a rudder, screw other elements of a propulsion system. The one or more first conductors are to be mounted at a position substantially opposite to the position of the second conductor with respect to the protected area, so as to provide the electrical potential across the protected area of the surface. The power source is arranged to provide the charge current for effectively all capacitance installed on a marine structure to be powered via said first and second conductors coupled to the poles of the power source.

Optionally, the power source is arranged to generate the voltage pulses having rising or falling slopes at a required rate of volts per second for generating charging or discharging currents as required for the anti-fouling. The above charging circuit effectively has a time constant due to said capacitance and said effective resistance, and the required rate preferably exceeds a current slope of the charging current due to said time constant, so as to generate a charge current or discharge pulse of maximal strength.

In an embodiment of the arrangement, the power source is arranged to generate the voltage pulses having rising and falling slopes by switching a DC voltage on and off. In practice, a DC power source can be easily provided with a switching circuit, e.g. a power FET or other switch, to connect and disconnect the DC power to the first or second conductor. Advantageously, due to said switching circuit, any switching operation will result in pulses having steep slopes. Optionally, the power source is arranged to generate the voltage pulses having ramps constituting the rising slopes, the ramp limiting the amount of charging current for charging the floating electrodes, and the voltage pulses having falling slopes by switching the voltage off. Advantageously, by providing a ramp at the start of the voltage pulse, the amount of charge current is limited, as the charge current of a capacitor depends on the rate of change of the voltage ramp.

In an embodiment of the arrangement, the power source is arranged to generate the voltage pulses having a limited duration between the rising and falling slopes, the duration being limited to enable the charging current to charge the floating electrodes and to limit subsequent discharging of the floating electrodes due to leakage current. The limited duration is to be selected based on the above time constant of the charging circuit, so as to enable the capacitors to be substantially fully charged. Also, as leakage current may occur, for example to a ship's hull, the floating capacitors may slowly discharge which reduces any discharge currents when the voltage pulse terminates by a falling slope. Advantageously, the limited duration may be selected to be as short as possible to limit the degrading of discharge currents due to leakage currents.

In an embodiment of the arrangement, the first conductor is arranged for constituting an anode and the second conductor comprises conductive parts of the marine structure in direct contact with the liquid for constituting a cathode; and the power source is further arranged to yield impressed current cathodic protection (ICCP) of the marine structure by generating an average DC component between the anode and the cathode. Advantageously, the arrangement now combines ICCP and the anti-fouling protection based on (dis-)charging floating capacitors. Optionally, the power source may be arranged to generate the average DC component by pulse width modulation of the voltage pulses. Alternatively, or additionally, the power source may be arranged to generate the average DC component by providing a continuous DC offset voltage added to the voltage pulses.

In an embodiment of the arrangement, the conductive layer is isolated from the marine structure by a coating layer of the surface of the marine structure. Alternatively, or additionally, the conductive layer may be isolated from the liquid by a coating layer constituting the dielectric layer. Advantageously, at least one of the coating layers and conductive layer may be provided by spraying or painting. For example, an isolating layer may be applied to the ship to be followed by a patterned metallic layer using a mask during spraying and removing the mask after spraying, and finally spraying a cover layer constituting the dielectric layer.

In an embodiment of the arrangement, the arrangement comprises a foil of isolating material, the foil comprising a multitude of the conductive layers positioned next to each other. Optionally, the conductive layers are isolated from the liquid by the isolating material constituting the dielectric layer; and/or the conductive layers are isolated from the protected surface by the isolating material. Alternatively, or additionally, the one or more conductive layers may be embedded in the isolating material close to the liquid for constituting the dielectric layer having a limited thickness, the isolating material further constituting a separation layer between the conductive layer and the surface of the marine structure, the separation layer having a thickness well above the limited thickness. In such foils, the conductive layers may be embedded relatively near to a front side of the foil to be in contact with the liquid. The backside of the foil may be glued to the surface of the marine structure. In the foil, conductive layers may be positioned next to each other, e.g. parts of one layer separated by small tracks of isolating material.

Also, separate patches of conductive material may be positioned in two separate layers in a foil, the two layers being isolated from each other by an intermediate layer. The patches in different layers may be arranged directly adjacent, or even slightly overlapping, when observed from the surface of the foil while being at said two different layers to be electrically isolated.

Optionally, the arrangement comprises tiles of isolating material in sheet form, the tiles comprising one conductive layer or a multitude of the conductive layers positioned next to each other, which multitude may be positioned similar to the positioning in the above foil.

Advantageously, such foil or tiles can be easily applied to the area of the surface that is to be protected, e.g. by gluing. During such mounting, parts of the foil or tiles may overlap to avoid interruptions of the protected area where no floating electrode is present and a reduced anti-fouling effect might occur.

Also, the foil or tiles may be applied to an area that was protected earlier but got damaged causing short-circuits between the conductive layer and the liquid and/or the surface of the marine structure. So, repair of damaged areas may be relatively easy, e.g. a scratch may be patched by a sticker. The sticker may comprise of for example a metal foil sandwiched between two isolating foils, or an metal layer on top of an isolator, which is finally coated or painted.

In an embodiment of the marine structure having the arrangement installed, a multitude of the floating electrodes comprises a pattern of said conductive layers shaped in complementary forms each constituting a floating electrode separated by interruptions from adjacent floating electrodes. The interruptions provide electrical isolation and are relatively small with respect to the floating electrodes. Alternatively, or additionally, a multitude of the floating electrodes comprises partly overlapping floating electrodes, the conductive layers of the overlapping floating electrodes being separated by isolating material, the isolating material providing electrical isolation between overlapping parts of the partly overlapping floating electrodes.

The invention is applicable in various contexts. For example, the arrangement according to the invention may be applied in the context of a marine vessel. So, optionally, a marine structure has an outer surface comprising the above arrangement, wherein the floating electrodes are attached to said surface for anti-fouling of the surface when immersed in a fouling liquid containing biofouling organisms. Also, in a method for installing the above arrangement, the method comprises the step of attaching the floating electrodes to a surface of a marine structure for anti-fouling of the surface when immersed in a fouling liquid containing biofouling organisms. Also, operational use of the above arrangement is foreseen, while the floating electrodes are installed to a surface of a marine structure. Then the power source is generating said voltage pulses.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows an arrangement for anti-fouling of a surface of a marine structure;
Fig. 2 shows an example of a marine structure having an anti-fouling arrangement;
Fig. 3 shows an example of charging and discharging currents; and
Fig. 4 shows an example of floating electrodes in a foil.

The figures are purely diagrammatic and not drawn to scale. In the Figures, elements which correspond to elements already described may have the same reference numerals.

### DETAILED DESCRIPTION OF THE EMBODIMENTS

In the following, the present invention will be explained with reference to an application scenario, in which it is used

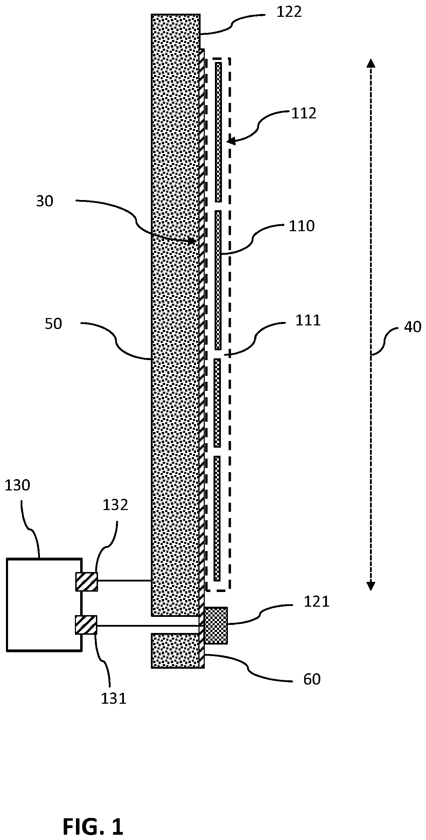

Fig. 1 shows an arrangement for anti-fouling of a surface of a marine structure. A marine structure 50 is partly shown in cross section. In use, the marine structure is in contact with a liquid containing biofouling organisms, e.g. seawater. It is assumed that the liquid, e.g. seawater, lake water or any other watery environment, is conductive. The arrangement has a power source 130 and a number of floating electrodes 110 arranged on the surface. The part of the surface that is covered is called a protected area 40, as indicated by an arrow.

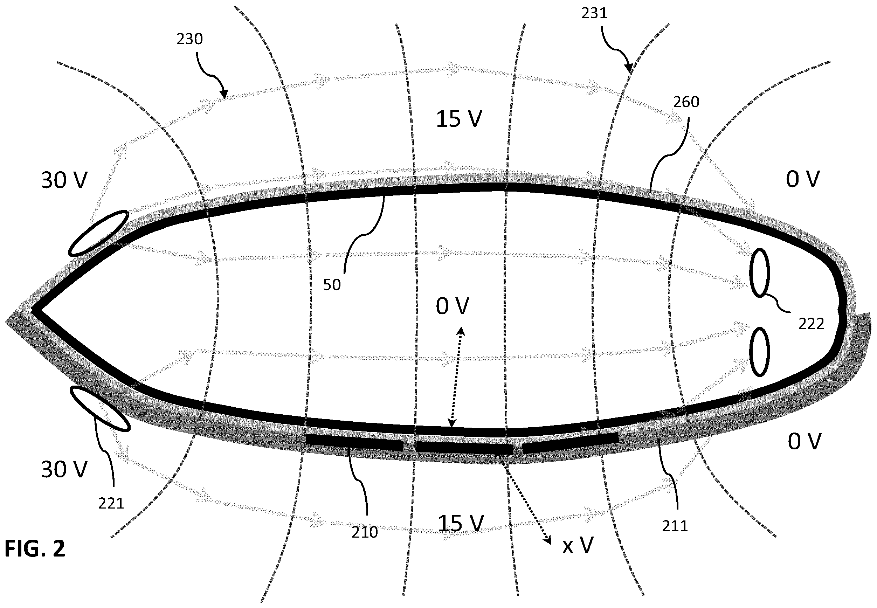

The power source has a first pole 131 coupled to a first conductor 121 in contact with the liquid, for example a metal electrode extending into the liquid. The power source also has a second pole 132 coupled to a second conductor 122 in contact with the liquid. In the Figure, the marine structure is show to be covered by a coating layer or paint layer 60. The second conductor is formed by a bare area of the marine structure, e.g. a rudder of a ship. For example, for a fully painted ship, propellers are usually unpainted and have an electric connection towards the inner hull. The hull is coupled to one pole of the power source at ground or minus potential and thus also the propellers are at that potential. Instead of, or in addition to, using existing parts of the marine structure, the second conductor may also have one or more metal electrodes extending into the liquid. In use, the first and second conductors are positioned distributed across the marine structure. The power source generates a voltage difference between the conductors so as to provide an electrical potential across the protected area 40. The electrical potential is further elucidated with reference to Fig. 2.

The floating electrodes 110 are arranged covering the protected area. Each floating electrode has a conductive layer being electrically isolated from the surface, the Figure showing four of such electrodes. In practice a large number of electrodes will be positioned on the surface to be protected. In the example embodiment, isolation from the marine structure is formed by the paint layer 60, and by the conductive layer being embedded in an isolating material 111. The isolating material also forms a dielectric layer 112 which separates the conductive layer and the liquid.

Optionally, the conductive layer may be applied as a metallic layer to the surface as follows. Before applying the metallic layer, the surface is isolated by a coating layer or paint layer on the surface of the marine structure. Then conductive shapes are provided on the coating or paint, e.g. metal foils glued on the isolated surface. Optionally, a pattern of shapes may be formed by spraying a conductive paint while using a mask that provides interruptions between the shapes. Also, a metallic layer may be provided first and subsequently locally interrupted to form isolated patches. Finally, the conductive layer may be isolated from the liquid by a further coating or paint layer of isolating material constituting the dielectric layer.

The power source is arranged to generate voltage pulses for charging and discharging the floating electrodes due to changes in the electrical potential for generating charging and discharging currents in the liquid at the dielectric layer, as elucidated now.

Fig. 2 shows an example of a marine structure having an anti-fouling arrangement. In the example, the marine structure 50 is a ship's hull, as schematically indicated in top view. The hull is covered by an isolating layer 260, e.g. one or more paint layers. On the hull electrodes are located, two so-called anodes 221 on the front end and two cathodes 222 on the back end of the ship. The cathodes may be formed by the ship's screw, screws and/or rudder, which are non-isolated parts of the ship. A power source (not shown) is connected between the first electrodes and the second electrodes to generate the voltage pulses as required for charging and discharging the floating capacitors.

The Figure shows the electrical potential across the protected area by grey arrows 230 indicating current flowing from the first to the second conductors via the liquid. Also, the Figure shows lines 231 having the same potential, also called iso-potential lines. In the example, the potential at the anodes is shown as 30 Volt, and the potential at the cathodes is shown a 0 Volt. In between the conductors, a potential of 15 Volt is indicated near floating electrodes 210 (only a few shown). The electrodes are formed by metal layers covered by an isolating layer 211, e.g. another paint layer or coating sprayed on the metal layers, which isolating layers form a dielectric layer separating the metal layers from the conductive liquid. So, the floating electrodes, in combination with the dielectric layer and the liquid, form capacitors.

After the start of a voltage pulse, e.g. by a switch connecting ta DC voltage to the anodes, the floating electrodes are charged. The potential of the electrodes is indicated as x Volt. The hull is coupled to the cathodes and remains at 0 Volt, as indicated by a dashed arrow. If effectively a low capacitance is formed between the hull and the floating electrodes, the electrodes will be charged to almost 15 Volt. Actually, the value of x depends on the ratio of said capacitance to the liquid and the capacitance of the electrodes to the ship's hull. If both dielectric layers are of equal effective thickness, the potential of 15 Volt in the liquid will charge the capacitor to 7,5 Volt. By providing a relatively thin top cover layer and a relatively thick paint layer on the hull, the potential will be higher, proportional to the ratio of both capacitances.

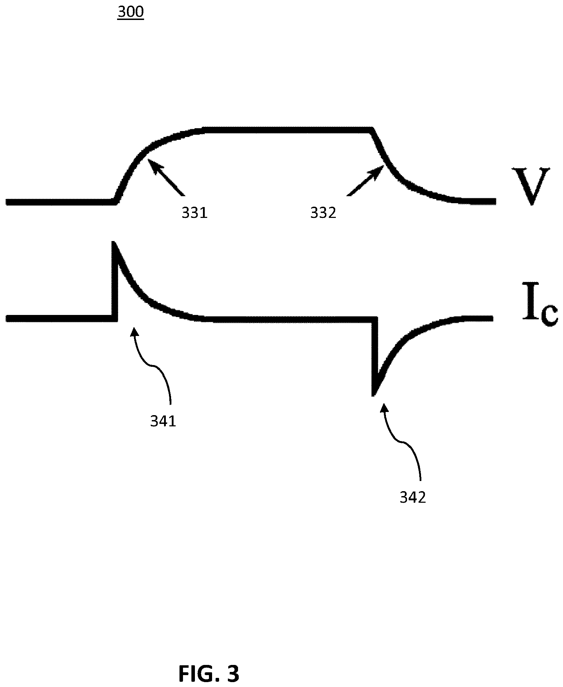

It is assumed that the power source can deliver the current required for charging the capacitors. However, in practice the current from the power source may be limited, and also the liquid may have some resistance. So, the capacitors will be charged by a voltage pulse have a slope according to a time constant, as illustrated in Fig. 3

After the voltage pulse ends, e.g. by switching off a DC power source or according to a pulse duration determined by the power source, the electrical potential across the marine structure will be zero, and the floating electrodes will discharge. The charging and discharging currents will flow via the liquid and the first and second conductors. In particular, the charging and discharging currents will also flow at the dielectric layer, i.e. at the surface of the isolating material where the dielectric layer contacts the liquid. By the charging and/or discharging currents occurring at that surface biofouling at that surface is prevented, or at least reduced.

To counter natural corrosion of the steel hull most ships are coated or painted and in addition often equipped with passive or active cathodic protecting systems such that the ship hull remains protected against natural corrosion when the protective coat or paint fails locally. Passive systems use sacrificial Zinc, Aluminum or Iron anodes that dissolve electro-chemically over time. To protect the unpainted propellers and unpainted sections of the hull from corroding, an electric current (DC) may be sent to these parts, called impressed current. Since seawater wets all these parts, a seawater wet anode at a positive potential may be used to reach all these parts. Such active systems impress a DC current in using anodes made of MMO-Ti (mix metal oxides) coated Titanium or Pt/Ti (Platinum coated Titanium). For active systems impressing a DC current into the sea water (ICCP) careful monitoring is required as too large currents may dissolve the hull locally at enhanced rates. Obviously, anti-fouling solutions should not render the cathodic protection system to fail. Hence, the ship's hull may act as one terminal, and the sea water may serve as a high conductivity medium closing the electric circuit to the other conductor terminal.

In practice, once the capacitors are charged the current consumption drops to zero. An ICCP system providing current via the same anodes and cathodes can also be used to charge the floating capacitors, e.g. by using a switch to create pulses. Adjustment for changing conditions may be done by, for example, averaging using pulse width modulation or duty-cycle adaption to provide the required DC component and to charge the capacitors sufficiently to yield a pH change. When using a switch to switch off the anodes and the anodes are open, the capacitors will discharge towards the naked propellers. The current now flowing out of the capacitor may alter the pH at the surface to reduce bio-fouling. It is noted that, in a system that also provides ICCP, the discharge current direction is equal to the ICCP current direction. Hence ICCP corrosion protection is not opposed.

Fig. 3 shows an example of charging and discharging currents. In the Figure, a top curve marked V represents the voltage across a capacitor constituted by the floating electrodes, the dielectric layer and the liquid. The voltage shows a voltage pulse having a rising slope 331 and a falling slope 332. The voltage pulse is generated by the power source as described above. A lower curve marked Ic represents the current at the dielectric layer to said capacitor, in particular showing a charging current 341 and a discharging current 342. It is noted that the rising and falling slopes, and the charging current and discharging current, in the example have complementary shapes. In practice, the currents and slopes may differ due to different impedances of the power source and/or switching circuitry during charging and discharging. The power source is arranged to generate the voltage pulses having rising or falling slopes at a required rate of volts per second for generating charging or discharging currents as required for the anti-fouling.

In an embodiment, the power source is arranged to generate the voltage pulses having rising and falling slopes by switching a DC voltage on and off. A power switch, e.g. a power FET or electromechanical switch, may be connected in series between a pole of the power source and the conductor in contact with the liquid. In practice, the speed of building up the electrical potential on the floating electrode depends on the total available load current and the total surface of all floating electrodes on the marine structure, and the effective resistance of the path via the liquid. The resistance of seawater is low, e.g. a few tenths of an Ohm, and depends on the salt level and temperature of the seawater. The power source may be designed to provide large currents, so as to enable the capacitors to be charged quickly, i.e. the speed only being limited by the resistance of the seawater. The power source may be provided, at the output, with a large electrolytic capacitor or super capacitor to provide large currents during the short charging interval.

For example, assuming the resistance is 1 Ohm, and the total surface of floating electrodes on a large vessel is 15.000 m², and the capacitance per m² is between 1-10 mF, charging may take between 0,15 and 1,5 sec. Discharging may take about the same period, for e large vessel about 0,6 - 6 sec. For small structures a much higher frequency may apply, as the total capacitance is much lower, e.g. 100 Hz to 1 kHz for 15 m².

A relatively slow charging cycle may be executed using a DC power source having a switch to connect and disconnect the power. The switch may be a mechanical switch or relay, or an electronic switch, e.g. a power FET. Also, low frequency AC pulses may be used. To avoid generation of hydrogen at bare parts of the marine structure that are used as conductor for the charge currents, the floating capacitors will be charged to a few volts only, e.g. 4 Volt. A corresponding slope is then about 4 V/ 0,2 sec = 20 V / sec.

In an embodiment, the power source is arranged to generate the voltage pulses having ramps constituting the rising slopes, the ramp limiting the amount of charging current for charging the floating electrodes, and the voltage pulses having falling slopes by switching the voltage off. In the embodiment, the charging currents may be smaller than the discharging currents. For example, the power source is provided with a current limiter on the output so as to limit the total charging current. Effectively a voltage pulse so limited will have a ramp as rising slope. By switching the power to zero volt, or directly connecting the second conductor to the first conductor, e.g. said anode to the hull, the discharge currents will be only limited by the impedance of the liquid. Effectively, the total charging current is limited while the discharge currents may be larger.

In an embodiment, the power source is arranged to generate the voltage pulses having a limited duration between the rising and falling slopes. Effectively the pulse need only be long enough to charge the floating electrodes, as a longer pulse only requires additional power due to current flowing from the first conductor to the second conductor, as shown by current arrows 230 in Fig. 2. The duration may also be limited to limit subsequent discharging of the floating electrodes due to leakage current. The leakage current may occur between the charged floating electrode and the hull, for example if the paint layer 260 contains some conductive particles.

In an embodiment of the arrangement for anti-fouling, the first conductor is arranged for constituting an anode and the second conductor comprises conductive parts of the marine structure in direct contact with the liquid for constituting a cathode; and the power source is further arranged to yield impressed current cathodic protection of the marine structure by generating an average DC component between the anode and the cathode. For example, by generating of voltage pulses of an appropriate length and subsequent pauses between pulses, a required average DC component is generated. Effectively, anti-fouling and ICCP are combined by using a single power source and the same conductors as anode and cathode, and by controlling the pulse widths and voltage of the pulses. So, the power source may be arranged to generate the average DC component for ICCP by pulse width modulation of the voltage pulses. Alternatively, or additionally, the power source may be arranged to generate the average DC component by providing a continuous DC offset voltage added to the voltage pulses.

In an embodiment of the arrangement, the floating electrodes are embedded in a foil of isolating material. The foil may comprise a multitude of the conductive layers positioned next to each other. The foil may be glued to the surface to be protected, which surface is first provided with an isolating layer, e.g. a paint layer or a further foil. Optionally, the arrangement comprises tiles of isolating material in sheet form. A tile may have one conductive layer, isolated at the edges of the tile. Also, the tile may have a multitude of the conductive layers positioned next to each other. Multiple tiles may be glued to a surface to be protected. Optionally, such foils or tiles may overlap during mounting. Where conductive layers overlap, effectively some capacitances in series are formed, while charging and discharging currents still occur at the front capacitor. In the foils and/or tiles, the conductive layers may be isolated from the liquid by the isolating material constituting the dielectric layer. Also, the conductive layers may be isolated from the protected surface by the isolating material. The conductive layers may be embedded in the isolating material close to the liquid to form the dielectric layer having a limited thickness. The isolating material may further constitute a separation layer between the conductive layer and the surface of the marine structure. The separation layer has a thickness well above the limited thickness. The capacitance between the floating electrode and the liquid will then be well above the capacitance between the floating electrode and the marine structure.

A marine structure may have a surface to be protected when in contact with a liquid containing biofouling organisms. The marine structure may be provided with an arrangement as described above to be protected from bio-fouling. The first and second conductors are distributed across the marine structure for, in use when powered, providing an electrical potential across the protected area of the surface. The power source has the first pole coupled to the first conductor and the second pole coupled to the second conductor. The floating electrodes are attached on the surface of the marine structure covering the protected area.

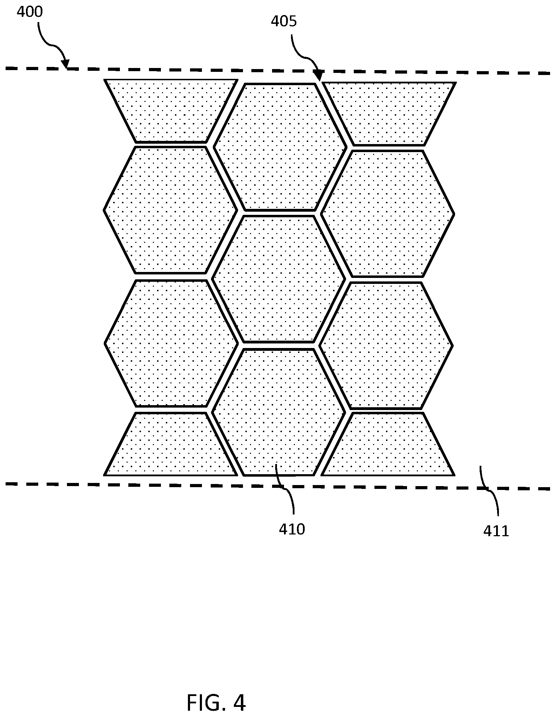

Fig. 4 shows an example of floating electrodes in a foil. In an embodiment of the marine structure, a multitude of the floating electrodes is provided by a pattern of said conductive layers shaped in complementary forms. The Figure shows a foil 400 in top view indicated by dashed line. The foil has floating electrodes 410 embedded in an isolating material 411. The foil may continue in horizontal direction of the Figure having a continuing pattern of floating electrodes in complementary forms. Alternatively, tiles may be provided that have a practical size for mounting on a marine structure, e.g. 1m x 1m. Such tiles may have such a pattern of complementary forms. Individual electrodes in such patterns may have sides of 0,1 m to 0,5 m. It is noted that the charge and discharge currents per square cm do not depend on the size of the shapes or sides. Hence, smaller shapes may be more practical as damage to the isolating material, e.g. a scratch, will only take out the respective small electrodes that are now in direct contact with the liquid.

The floating electrodes may be formed by a metallic layer, or any other conductive layer, having interruptions 405 in between respective floating electrodes. In the conductive layer, hexagons are shown as an example of complementary forms. A form of the respective isolated floating electrodes is called complementary, if the adjacent parts of neighboring forms are shaped so that small interruptions 405 are in between electrodes. Other examples may be squares or rectangles, or triangles. Each floating electrode is separated by interruptions from adjacent floating electrodes. The interruptions 405 provide electrical isolation and are relatively small with respect to the floating electrodes. On the interruptions, the protection may be less effective, as locally no currents are generated. So, the interruptions are to be made as small as possible. Also, the sides may be undulating or saw-tooth lie in a complementary way, to avoid straight lines of interruptions of isolated material.

Optionally, the floating electrodes may partly overlap so as to avoid said interruptions (as seen in top view) while still being isolated (in cross section) by an intermediate layer of isolating material. Due to the intermediate layer, the conductive layers of the overlapping floating electrodes are separated by isolating material. The isolating material provides electrical isolation between overlapping parts of the partly overlapping floating electrodes. Optionally, the intermediate layer may be relatively thick with respect to the dielectric layers.

A method for installing the above arrangements has the following steps, applied to a marine structure to be protected from fouling when in contact with a liquid containing biofouling organisms. In a first step, the surface of the marine structure that is to be protected may be painted or coated with is isolating layer. In a next step, the one or more floating electrodes may be applied to the surface of the marine structure for covering the protected area of the surface. Also, the first and second conductors may be distributed across the marine structure for providing an electrical potential across the protected area. In a further step, the power source may be provided in or on the marine structure. Finally, the power source is to be connected, e.g. by coupling the first pole to the first conductor, and coupling the second pole to the second conductor.

A method of operating any of the above arrangements has the following steps. Before operation starts, the arrangement is mounted to a marine structure, and the floating electrodes are located on the surface of the marine structure to be protected from fouling for covering a protected area of the surface. Each floating electrode has a conductive layer which is electrically isolated from the surface and a dielectric layer to separate the conductive layer and the liquid. Also, the first and second conductors are distributed across the marine structure for, when powered, providing an electrical potential across the protected area.

In operation, the marine structure is in contact with a liquid containing biofouling organisms. The method involves generating voltage pulses between the first and second conductors for charging and discharging the floating electrodes due to changes in an electrical potential across the protected area for generating charging and discharging currents in the liquid at the dielectric layer.

It will be clear to a person skilled in the art that the scope of the invention is not limited to the examples discussed in the foregoing, but that several amendments and modifications thereof are possible. While the invention has been illustrated and described in detail in the figures and the description, such illustration and description are to be considered illustrative or exemplary only, and not restrictive. The invention is not limited to the disclosed embodiments. The drawings are schematic, wherein details that are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The term "comprise" as used in this text will be understood by a person skilled in the art as covering the term "consist of'. Hence, the term "comprise" may in respect of an embodiment mean "consist of', but may in another embodiment mean "contain/include at least the defined species and optionally one or more other species". Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

In a general sense, it is a basic function of the anti-fouling arrangement according to the invention to keep a protected surface free from biofouling. Hence, the invention is applicable in all situations involving a fouling risk, which are situations in which the protected surface is intended to be immersed, at least during a part of the lifetime thereof, in a fouling liquid containing biofouling organisms. Seawater is a well-known example of such a fouling liquid. A marine structure may have a surface on which the above described anti-fouling arrangement is applied for anti-fouling of the surface when immersed in a fouling liquid containing biofouling organisms. Similarly, a method for installing the above arrangement includes the step of attaching the arrangement to a surface of a marine structure and providing the power source coupled to the respective conductors.

Finally, use of the above arrangement is foreseen, in particular use of the arrangement installed on a surface of a marine structure for anti-fouling of the surface when immersed in a fouling liquid containing biofouling organisms. The use requires the floating electrodes to be charged and discharged by the power source as described above. For example, the arrangement according to the invention may be applied on a vessel's hull. Other examples of a protected surface include the exterior surface of box coolers, surfaces of subsea off-shore equipment, interior walls of water reservoirs like ballast tanks of vessels, and filter surfaces of filter systems in desalination plants.

Summarizing, an arrangement is provided for anti-fouling of a surface of a marine structure when in contact a liquid like seawater. The arrangement has floating electrodes and a power source coupled to first and second conductors in contact with the liquid, which conductors are distributed across the marine structure for providing an electrical potential across a protected area of the surface. The floating electrodes are arranged on the surface covering a protected area. Each floating electrode has a conductive layer being electrically isolated from the surface, and a dielectric layer separating the conductive layer and the liquid. The power source is arranged to generate voltage pulses for charging and discharging the floating electrodes due to changes in the electrical potential for generating charging and discharging currents in the liquid at the dielectric layer. Effectively, such currents prevent or reduce biofouling.

## Claims

1. Arrangement for anti-fouling of a surface (30) of a marine structure (50) when in contact with a liquid containing biofouling organisms, the arrangement comprising:
- a power source (130) having a first pole (131) to be coupled to a first conductor (121) in contact with the liquid and a second pole (132) to be coupled to a second conductor (122) in contact with the liquid, the first and second conductors being distributed across the marine structure for providing an electrical potential across a protected area (40) of the surface; and
- one or more floating electrodes (110) to be arranged covering the protected area, each floating electrode comprising a conductive layer being electrically isolated from the surface and a dielectric layer (112) to separate the conductive layer and the liquid;
the power source being arranged to generate voltage pulses for charging and discharging the floating electrodes due to changes in the electrical potential for generating charging and discharging currents (341,342) in the liquid at the dielectric layer.

2. The arrangement according to claim 1, wherein the power source (130) is arranged to generate the voltage pulses having rising (331) or falling slopes (332) at a required rate of volts per second for generating charging or discharging currents as required for the anti-fouling.

3. The arrangement according to claim 1 or 2, wherein the power source (130) is arranged to generate the voltage pulses having rising and falling slopes by switching a DC voltage on and off; or the power source is arranged to generate the voltage pulses having ramps constituting the rising slopes, the ramp limiting the amount of charging current for charging the floating electrodes, and the voltage pulses having falling slopes by switching the voltage off.

4. The arrangement according to any of the preceding claims, wherein the power source (130) is arranged to generate the voltage pulses having a limited duration between the rising and falling slopes, the duration being limited to enable the charging current to charge the floating electrodes and to limit subsequent discharging of the floating electrodes due to leakage current.

5. The arrangement according to claim 1, 2 or 3, wherein
the first conductor (121) is arranged for constituting an anode and the second conductor (122) comprises conductive parts of the marine structure in direct contact with the liquid for constituting a cathode; and
the power source (130) is further arranged to yield impressed current cathodic protection of the marine structure by generating an average DC component between the anode and the cathode.

6. The arrangement according to claim 5, wherein the power source (130) is arranged to generate the average DC component by pulse width modulation of the voltage pulses.

7. The arrangement according to claim 5 or 6, wherein the power source (130) is arranged to generate the average DC component by providing a continuous DC offset voltage added to the voltage pulses.

8. The arrangement according to any of the preceding claims, wherein
the conductive layer is isolated from the marine structure by a coating layer (60) of the surface of the marine structure; and/or
the conductive layer is isolated from the liquid by a coating layer constituting the dielectric layer.

9. The arrangement according to any of the preceding claims, wherein
the arrangement comprises a foil of isolating material (111), the foil comprising a multitude of the conductive layers positioned next to each other; or
the arrangement comprises tiles of isolating material in sheet form, the tiles comprising one conductive layer or a multitude of the conductive layers positioned next to each other.

10. The arrangement according to claim 9, wherein the conductive layers are isolated from the liquid by the isolating material constituting the dielectric layer; and/or the conductive layers are isolated from the protected surface by the isolating material.

11. The arrangement according to claim 9 or 10, wherein the one or more conductive layers are embedded in the isolating material close to the liquid to form the dielectric layer having a limited thickness, the isolating material further constituting a separation layer between the conductive layer and the surface of the marine structure, the separation layer having a thickness well above the limited thickness.

12. Marine structure having a surface to be protected when in contact with a liquid containing biofouling organisms, the marine structure comprising an arrangement (100) as claimed in any one of claims 1 to 11, wherein
- the first and second conductors (121,122) are distributed across the marine structure for providing an electrical potential across a protected area of the surface;
- the power source (130) has the first pole coupled to the first conductor and the second pole coupled to the second conductor; and
- the one or more floating electrodes (110) are attached on the surface of the marine structure covering the protected area.

13. The marine structure according to claim 12, wherein a multitude of the floating electrodes (410) comprises a pattern of said conductive layers shaped in complementary forms each constituting a floating electrode separated by interruptions from adjacent floating electrodes, the interruptions providing electrical isolation and being relatively small with respect to the floating electrodes; or a multitude of the floating electrodes comprises partly overlapping floating electrodes, the conductive layers of the overlapping floating electrodes being separated by isolating material, the isolating material providing electrical isolation between overlapping parts of the partly overlapping floating electrodes.

14. Method for installing the arrangement as defined in any one of claims 1 to 11, the method comprising
- applying the one or more floating electrodes to a surface of a marine structure to be protected from fouling when in contact with a liquid containing biofouling organisms for covering a protected area of the surface;
- distributing the first and second conductors across the marine structure for providing an electrical potential across the protected area;
- providing the power source (130) in or on the marine structure; and
- coupling the first pole to the first conductor and the second pole to the second conductor.

15. Method of operating the arrangement as defined in any one of claims 1 to 11,
the one or more floating electrodes being located on a surface of a marine structure to be protected from fouling for covering a protected area of the surface, the marine structure being in contact with a liquid containing biofouling organisms;
each floating electrode comprising a conductive layer being electrically isolated from the surface and a dielectric layer to separate the conductive layer and the liquid;
first and second conductors being distributed across the marine structure for providing an electrical potential across the protected area;
the method comprising
- generating voltage pulses between the first and second conductors for charging and discharging the floating electrodes due to changes in an electrical potential across the protected area for generating charging and discharging currents in the liquid at the dielectric layer.

## Patentansprüche

1. Anordnung zur Verhinderung des Bewuchses einer Oberfläche (30) einer Schiffsstruktur (50) bei Kontakt mit einer Flüssigkeit, die Biobewuchsorganismen enthält, wobei die Anordnung Folgendes umfasst:
- eine Stromquelle (130) mit einem ersten Pol (131), der mit einem ersten Leiter (121) in Kontakt mit der Flüssigkeit zu verbinden ist, und einem zweiten Pol (132), der mit einem zweiten Leiter (122) in Kontakt mit der Flüssigkeit zu verbinden ist, wobei der erste und der zweite Leiter über die Schiffsstruktur verteilt sind, um ein elektrisches Potential über einen geschützten Bereich (40) der Oberfläche bereitzustellen; und
- eine oder mehrere erdfreie Elektroden (110), die so angeordnet werden sollen, dass sie den geschützten Bereich abdecken, wobei jede erdfreie Elektrode eine leitende Schicht, die von der Oberfläche elektrisch isoliert ist, und eine dielektrische Schicht (112) zur Trennung der leitenden Schicht und der Flüssigkeit umfasst;
wobei die Stromquelle so ausgelegt ist, dass sie Spannungsimpulse zum Laden und Entladen der erdfreien Elektroden aufgrund von Änderungen des elektrischen Potenzials zur Erzeugung von Lade- und Entladeströmen (341, 342) in der Flüssigkeit an der dielektrischen Schicht erzeugt.

2. Anordnung nach Anspruch 1, bei der die Stromquelle (130) so ausgelegt ist, dass sie die Spannungsimpulse mit steigenden (331) oder fallenden Flanken (332) mit einer erforderlichen Rate von Volt pro Sekunde zur Erzeugung von Lade- oder Entladeströmen, wie sie für den Bewuchsschutz erforderlich sind, erzeugt.

3. Anordnung nach Anspruch 1 oder 2, wobei die Stromquelle (130) so ausgelegt ist, dass sie die Spannungsimpulse mit steigenden und fallenden Flanken durch Ein- und Ausschalten einer Gleichspannung erzeugt; oder die Stromquelle so ausgelegt ist, dass sie die Spannungsimpulse mit Rampen erzeugt, die die steigenden Flanken bilden, wobei die Rampe die Menge des Ladestroms zum Laden der erdfreien Elektroden begrenzt und die Spannungsimpulse durch Ausschalten der Spannung fallende Flanken haben.

4. Anordnung nach einem der vorstehenden Ansprüche, bei der die Stromquelle (130) so ausgelegt ist, dass sie Spannungsimpulse mit einer begrenzten Dauer zwischen den steigenden und fallenden Flanken erzeugt, wobei die Dauer begrenzt ist, damit der Ladestrom die erdfreien Elektroden aufladen kann und die nachfolgende Entladung der erdfreien Elektroden aufgrund von Leckstrom begrenzt wird.

5. Anordnung nach Anspruch 1, 2 oder 3, wobei der erste Leiter (121) so angeordnet ist, dass er eine Anode bildet, und der zweite Leiter (122) leitende Teile der Schiffsstruktur in direktem Kontakt mit der Flüssigkeit umfasst, um eine Kathode zu bilden; und die Stromquelle (130) ferner so ausgelegt ist, dass sie einen kathodischen Schutz der Schiffsstruktur mit eingeprägtem Strom erzeugt, indem sie eine durchschnittliche Gleichstromkomponente zwischen Anode und Kathode erzeugt.

6. Anordnung nach Anspruch 5, wobei die Stromquelle (130) so ausgelegt ist, dass sie die durchschnittliche Gleichstromkomponente durch Pulsbreitenmodulation der Spannungsimpulse erzeugt.

7. Anordnung nach Anspruch 5 oder 6, bei der die Stromquelle (130) so ausgelegt ist, dass sie die durchschnittliche Gleichstromkomponente erzeugt, indem sie eine kontinuierliche Gleichstrom-Offsetspannung liefert, die zu den Spannungsimpulsen addiert wird.

8. Anordnung nach einem der vorstehenden Ansprüche, wobei die leitende Schicht von der Schiffsstruktur durch eine Beschichtung (60) der Oberfläche der Schiffsstruktur isoliert ist; und/oder die leitende Schicht von der Flüssigkeit durch eine die dielektrische Schicht bildende Beschichtung isoliert ist.

9. Anordnung gemäß einem der vorstehenden Ansprüche, wobei die Anordnung eine Folie aus isolierendem Material (111) umfasst, wobei die Folie aus einer Vielzahl von nebeneinander angeordneten leitenden Schichten besteht; oder
die Anordnung Fliesen aus isolierendem Material in Plattenform umfasst, wobei die Fliesen eine leitende Schicht oder eine Vielzahl der nebeneinander angeordneten leitenden Schichten enthalten.

10. Anordnung nach Anspruch 9, bei der die leitenden Schichten von der Flüssigkeit durch das isolierende Material, das die dielektrische Schicht bildet, isoliert sind; und/oder die leitenden Schichten durch das isolierende Material von der geschützten Oberfläche isoliert sind.

11. Anordnung nach Anspruch 9 oder 10, wobei die eine oder mehrere leitende Schichten in das isolierende Material nahe der Flüssigkeit eingebettet sind, um die dielektrische Schicht mit einer begrenzten Dicke zu bilden, wobei das isolierende Material ferner eine Trennschicht zwischen der leitenden Schicht und der Oberfläche der Schiffsstruktur bildet, wobei die Trennschicht eine Dicke weit über der begrenzten Dicke aufweist.

12. Schiffsstruktur mit einer zu schützenden Oberfläche bei Kontakt mit einer Flüssigkeit, die Biobewuchsorganismen umfasst, wobei die Schiffsstruktur eine Anordnung (100) nach einem der Ansprüche 1 bis 11 aufweist, wobei
- der erste und zweite Leiter (121,122) über die Schiffsstruktur verteilt sind, um ein elektrisches Potential über einen geschützten Bereich der Oberfläche bereitzustellen;
- die Stromquelle (130) den ersten Pol mit dem ersten Leiter und den zweiten Pol mit dem zweiten Leiter verbunden hat; und
- die eine oder die mehreren erdfreien Elektroden (110) auf der Oberfläche der den geschützten Bereich bedeckenden Schiffsstruktur angebracht sind.

13. Schiffsstruktur nach Anspruch 12, wobei eine Vielzahl der erdfreien Elektroden (410) ein Muster der leitenden Schichten umfasst, die in komplementären Formen geformt sind und jeweils eine erdfreie Elektrode bilden, die durch Unterbrechungen von benachbarten erdfreien Elektroden getrennt sind, wobei die Unterbrechungen eine elektrische Isolierung bereitstellen und relativ klein in Bezug auf die erdfreien Elektroden sind; oder eine Vielzahl der erdfreien Elektroden teilweise überlappende schwimmende Elektroden umfasst, wobei die leitenden Schichten der überlappenden erdfreien Elektroden durch isolierendes Material getrennt sind, wobei das isolierende Material eine elektrische Isolierung zwischen überlappenden Teilen der teilweise überlappenden erdfreien Elektroden bereitstellt.

14. Verfahren zum Einbau der Anordnung gemäß einer der Ansprüche 1 bis 11,
wobei das Verfahren Folgendes umfasst
- Anbringen der einen oder mehreren erdfreien Elektroden auf einer Oberfläche einer Schiffsstruktur, die vor Bewuchs geschützt werden soll, wenn sie mit einer Flüssigkeit in Kontakt kommt, die Biobewuchsorganismen enthält, um einen geschützten Bereich der Oberfläche abzudecken;
- Verteilung des ersten und zweiten Leiters über die Schiffsstruktur, um ein elektrisches Potential über gesamten geschützten Bereich bereitzustellen;
- Bereitstellung der Stromquelle (130) in oder auf der Schiffsstruktur; und
Verbindung des ersten Pols mit dem ersten Leiter und des zweiten Pols mit dem zweiten Leiter.

15. Verfahren zum Betrieb der Anordnung nach einem der Ansprüche 1 bis 11,
wobei die eine oder die mehreren schwimmenden Elektroden auf einer Oberfläche einer vor Bewuchs zu schützenden Schiffsstruktur angeordnet sind, um einen geschützten Bereich der Oberfläche abzudecken, wobei die Meeresstruktur in Kontakt mit einer Flüssigkeit steht, die Biobewuchsorganismen enthält;
wobei jede schwimmende Elektrode eine leitende Schicht umfasst, die von der Oberfläche elektrisch isoliert ist, und eine dielektrische Schicht, um die leitende Schicht und die Flüssigkeit zu trennen; wobei der erste und der zweite Leiter über die Schiffsstruktur verteilt sind, um ein elektrisches Potential über den geschützten Bereich bereitzustellen;
wobei das Verfahren Folgendes umfasst:
- Erzeugung von Spannungsimpulsen zwischen dem ersten und zweiten Leiter zum Laden und Entladen der erdfreien Elektroden aufgrund von Änderungen eines elektrischen Potentials über den geschützten Bereich zur Erzeugung von Lade- und Entladungsströmen in der Flüssigkeit an der dielektrischen Schicht.

## Revendications

1. Agencement antisalissure d'une surface (30) d'une structure marine (50) lorsqu'elle est en contact avec un liquide contenant des organismes de salissure biologique, ledit agencement comprenant:
- une source d'alimentation (130) comportant un premier pôle (131) destiné à être couplé à un premier conducteur (121) en contact avec le liquide et un second pôle (132) destiné à être couplé à un second conducteur (122) en contact avec le liquide, les premier et second conducteurs étant répartis à travers la structure marine pour fournir un potentiel électrique à travers une zone protégée (40) de la surface; et
- au moins une électrode flottante (110) destinée à être disposée de manière à couvrir la zone protégée, chaque électrode flottante comprenant une couche conductrice étant électriquement isolée de la surface et une couche diélectrique (112) pour séparer la couche conductrice et le liquide;
la source d'alimentation étant conçue pour générer des impulsions de tension pour charger et décharger les électrodes flottantes en raison des changements du potentiel électrique pour générer des courants de charge et de décharge (341, 342) dans le liquide au niveau de la couche diélectrique.

2. Agencement selon la revendication 1, dans lequel la source d'alimentation (130) est conçue pour générer les impulsions de tension comportant des pentes montantes (331) ou descendantes (332) à une vitesse requise de volts par seconde pour générer des courants de charge ou de décharge comme requis pour l'antisalissure.

3. Agencement selon la revendication 1 ou 2, dans lequel la source d'alimentation (130) est conçue pour générer les impulsions de tension comportant des pentes montantes et descendantes en activant et en désactivant une tension continue; ou la source d'alimentation est conçue pour générer les impulsions de tension comportant des rampes constituant les pentes montantes, la rampe limitant la quantité de courant de charge pour charger les électrodes flottantes, et les impulsions de tension comportant des pentes descendantes lors d'une mise hors tension.

4. Agencement selon l'une quelconque des revendications précédentes, dans lequel la source d'alimentation (130) est conçue pour générer les impulsions de tension présentant une durée limitée entre les pentes montantes et descendantes, la durée étant limitée pour permettre au courant de charge de charger les électrodes flottantes et pour limiter la décharge ultérieure des électrodes flottantes en raison du courant de fuite.

5. Agencement selon la revendication 1, 2 ou 3, dans lequel
le premier conducteur (121) est conçu pour constituer une anode et le second conducteur (122) comprend des parties conductrices de la structure marine en contact direct avec le liquide pour constituer une cathode; et
la source d'alimentation (130) est en outre conçue pour fournir une protection cathodique à courant imposé de la structure marine en générant une composante continue moyenne entre l'anode et la cathode.

6. Agencement selon la revendication 5, dans lequel la source d'alimentation (130) est conçue pour générer la composante continue moyenne par modulation de largeur d'impulsion des impulsions de tension.

7. Agencement selon la revendication 5 ou 6, dans lequel la source d'alimentation (130) est conçue pour générer la composante continue moyenne en fournissant une tension de décalage continu continue ajoutée aux impulsions de tension.

8. Agencement selon l'une quelconque des revendications précédentes, dans lequel
la couche conductrice est isolée de la structure marine par une couche de revêtement (60) de la surface de la structure marine; et/ou
la couche conductrice est isolée du liquide par une couche de revêtement constituant la couche diélectrique.

9. Agencement selon l'une quelconque des revendications précédentes, dans lequel ledit agencement comprend une feuille de matière isolante (111), ladite feuille comprenant une pluralité de couches conductrices positionnées les unes à côté des autres; ou l'agencement comprend des carreaux de matière isolante sous la forme de feuille, lesdits carreaux comprenant une couche conductrice ou une pluralité de couches conductrices placées les unes à côté des autres.

10. Agencement selon la revendication 9, dans lequel les couches conductrices sont isolées du liquide par la matière isolante constituant la couche diélectrique; et/ou
lesdites couches conductrices sont isolées de la surface protégée par la matière isolante.

11. Agencement selon la revendication 9 ou 10, dans lequel l'au moins une couche conductrice est noyée dans la matière isolante à proximité du liquide pour former la couche diélectrique présentant une épaisseur limitée, la matière isolante constituant en outre une couche de séparation entre la couche conductrice et la surface de la structure marine, la couche de séparation présentant une épaisseur bien supérieure à l'épaisseur limitée.

12. Structure marine comportant une surface destinée à être protégée lorsqu'elle est en contact avec un liquide contenant des organismes de salissure biologique, ladite structure marine comprenant un agencement (100) selon l'une quelconque des revendications 1 à 11, dans laquelle
- les premier et second conducteurs (121, 122) sont répartis à travers la structure marine pour fournir un potentiel électrique à travers une zone protégée de la surface;
- la source d'alimentation (130) comporte le premier pôle couplé au premier conducteur et le second pôle couplé au second conducteur; et
- l'au moins une électrode flottante (110) est fixée sur la surface de la structure marine couvrant la zone protégée.

13. Structure marine selon la revendication 12, dans laquelle une pluralité d'électrodes flottantes (410) comprend un motif desdites couches conductrices formées en formes complémentaires constituant respectivement une électrode flottante séparée par des interruptions des électrodes flottantes adjacentes, lesdites interruptions fournissant une isolation électrique et étant relativement petite par rapport aux électrodes flottantes; ou une pluralité d'électrodes flottantes comprend des électrodes flottantes se chevauchant partiellement, les couches conductrices des électrodes flottantes se chevauchant étant séparées par une matière isolante, ladite matière isolante fournissant une isolation électrique entre les parties se chevauchant des électrodes flottantes se chevauchant partiellement.

14. Procédé d'installation de l'agencement tel que défini dans l'une quelconque des revendications 1 à 11,
ledit procédé consistant
- à appliquer l'au moins une électrode flottante sur une surface d'une structure marine destinée à être protégée contre la salissure lorsqu'elle est en contact avec un liquide contenant des organismes de salissure biologique pour recouvrir une zone protégée de la surface;
- à distribuer les premier et second conducteurs à travers la structure marine pour fournir un potentiel électrique à travers la zone protégée;
- à fournir la source d'alimentation (130) dans ou sur la structure marine; et
- à coupler le premier pôle au premier conducteur et le second pôle au second conducteur.

15. Procédé de fonctionnement de l'agencement tel que défini dans l'une quelconque des revendications 1 à 11, l'au moins une électrode flottante étant située sur une surface d'une structure marine destinée à être protégée contre la salissure pour couvrir une zone protégée de la surface, ladite structure marine étant en contact avec un liquide contenant des organismes de salissure biologique;
chaque électrode flottante comprenant une couche conductrice isolée électriquement de la surface et une couche diélectrique pour séparer la couche conductrice et le liquide;
des premier et second conducteurs étant répartis à travers la structure marine pour fournir un potentiel électrique à travers la zone protégée;
ledit procédé consistant
- à générer des impulsions de tension entre les premier et second conducteurs pour charger et décharger les électrodes flottantes en raison des changements d'un potentiel électrique à travers la zone protégée pour générer des courants de charge et de décharge dans le liquide au niveau de la couche diélectrique.
